# EUROPEAN PATENT APPLICATION

(11) **EP 1 291 767 A2**
(43) Date of publication of application: **12.03.2003**
(21) Application number: 02019983.2
(22) Date of filing: 05.09.2002
(51) Int. Cl.: G06F 9/44

(54) **Image-forming system having a graphic user interface with a main window displaying windows from various underlying applications**

(30) Priority: 05.09.2001 US 317677 P
(71) Applicant: Heidelberger Druckmaschinen Aktiengesellschaft, 69115 Heidelberg (DE)
(72) Inventor: Kremer, Karl-Heinz, Rochester, NY 14624 (US); Lehtonen, Mark H., Rochester, NY 14606 (US)
(74) Representative: Franzen, Peter

(57) **Abstract**

An image-forming system has a graphic user interface with a main window that displays windows from various applications implementing functionalities on the image-forming machine. The main window shows the windows from multiple applications as essentially one application or window on the graphic user interface.

## Description

This invention generally relates to image-forming systems having a graphic user interface. More particularly, this invention relates to image-forming machines and methods using a graphic user interface with a companion application window.

An image-forming machine transfers images from original documents onto paper or other medium to create a finished product such as a booklet, a folded brochure, or a tabbed notebook. The original documents may be in hard copy (paper or other medium) or in electronic form (floppy disk, compact disc, and the like) or may be transmitted over a network such as the Internet. A "print job" is the combination of original documents with instructions for producing the finished product.

Many image-forming machines have a graphic user interface (GUI) for visually representing and controlling the transfer of images for a print job. The GUI permits the creation and manipulation of relationships and associations among various components of the image-forming machine and the print job. These relationships and associations may be displayed using a hierarchical approach like a tree structure or file folder structure or using some alternate form of visual indication.

The GUI displays the graphical output or windows of the various software applications used to implement the functionalities of the image-forming machine. The windows typically are displayed singly, in layers of active windows, or as an active window with inactive windows. If multiple windows are used such as with companion applications and the like, a user usually needs to switch between the windows because only one window typically is active at a time. Other windows are actually viewable, but are not active and therefore do not receive user input via mouse, keyboard, and like events. In addition, the different windows have independent operations such that changes to one window usually do not affect the other windows.

This invention provides an image-forming system having a graphic user interface with a companion application window that displays windows from the various applications implementing functionalities in the image-forming system. The companion application window shows windows from multiple applications as essentially one application or window on the graphic user interface.

In one aspect, the image-forming system has an image-forming management functionality, a document viewing functionality, and a graphic user interface. The image-forming management functionality has a first window. The document viewing functionality has a second window. The graphic user interface is operatively connected to receive the first window from the image-forming management functionality and the second widow from the document viewing functionality. The graphic user interface provides a companion application window in response to the first window and the second window.

In another aspect, the image-forming system has a first software application, a second software application, and a graphic user interface. The graphic user interface is operatively connected to receive a first window from the first software application and a second window from the second software application. The graphic user interface displays a companion application window having the first and second windows.

In one method for providing a companion application window on a graphic user interface in an image-forming machine, an image-forming viewing functionality and a document viewing functionality are initialized. A companion application window is positioned on the graphic user interface. The companion application widow has at least one window from the image-forming management functionality and the document viewing functionality. Messages are monitored. The companion application window is repositioned on the graphic user interface in response to the messages.

In another method for displaying a companion application window on a graphic user interface in an image-forming machine, a first software application and a second software application are started. An integrated window is displayed on the graphic user interface. The integrated window has a first window from the first software application and a second window from the second software application. The first and second windows are viewable at essentially the same time.

Other systems, methods, features, and advantages of the invention will be or will become apparent to one skilled in the art upon examination of the following figures and detailed description.

The invention may be better understood with reference to the following figures and detailed description. The components in the figures are not necessarily to scale, emphasis being placed upon illustrating the principles of the invention. Moreover, like reference numerals in the figures designate corresponding parts throughout the different views.

Figure 1 represents a block diagram of an image-forming machine having a graphic user interface with a companion application window according to one embodiment.

Figure 2 represents a first view of a companion application window occupying the entire screen of a graphic user interface.

Figure 3 represents a second view of a companion application window occupying the entire screen of a graphic user interface.

Figure 4 represents another view of a companion application window partially occupying the screen of a graphic user interface.

Figure 5 is a flowchart of a method for providing a companion application window on a graphic user interface in an image-forming machine.

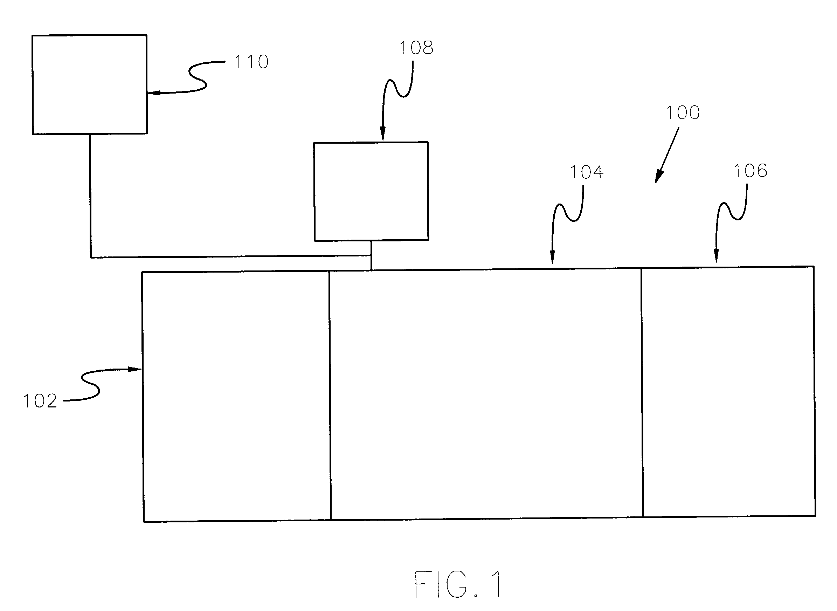

Figure 1 represents a block diagram of an image-forming machine 100 having a graphic user interface (GUI) 110 with a companion application window according to one embodiment. As described below, the companion application window shows windows from multiple software applications as essentially one application or window on the GUI 110. The software applications are used to implement functionalities such as image-forming management and document or image viewing on the image-forming machine 100. Other or additional applications may be used to implement these and other functionalities. While particular configurations and arrangements are shown, other configurations and arrangements may be used including those with other and additional components.

The image-forming machine 100 may be an electrophotographic device such as one of the Digimaster® digital printers manufactured by Heidelberg Digital L.L.C. located in Rochester, New York. The image-forming machine 100 also may be another electrophotographic machine, a photocopy machine, a printing device, or the like. In addition to the GUI 110, the image-forming machine 100 has a feeder 102, a marking engine 104, a finisher 106, and a printer use interface 108. The image-forming machine 100 may have other equipment. The feeder 102, the marking engine 104, the finisher 106, and the printer user interface 108 may be separate or integrated components. The printer user interface 108 may be a display unit with push buttons (not shown) or other activation means for inputting control parameters to the image-forming machine 100. The other activation means includes a touchscreen with a mouse and a keyboard.

The feeder 102 provides the printing or copying sheets to the printing engine 104. The sheets may be one or a combination of paper, transparencies, and other media. The sheets may be configured with pre-punched holes, tabs, and the like. In one aspect, the marking engine 104 includes a photoconductor (not shown), one or more chargers (not shown), an exposure machine (not shown), a toning station (not shown), and a fuser station (not shown). In operation, the photoconductor is selectively charged and optically exposed to form an electrostatic latent image on the surface. Toner is deposited onto the photoconductor surface. The toner is charged, thus adhering to the photoconductor surface in areas corresponding to the electrostatic latent image. The toner image is transferred onto the sheet. In the fuser station, the sheet is heated causing the toner to fix or adhere to the paper or other medium. The sheet exits the marking engine 104 and enters the finisher 106, which may discharge the sheet as is or may perform one or more finishing operations such as stapling, folding, and inserting an inserted sheet.

In one aspect, the GUI 110 is a separate component such as a dedicated desktop or other personal computer operatively connected to the image-forming machine 100. The GUI 110 also may be integrated with the printer user interface 108 or other components of the image-forming machine 100. The GUI 110 is operatively connected to a logic control unit (not shown) in the image-forming machine 100. Operatively connected includes transmission or communication means such as electrical, radio, network, and the like. The GUI and the logic control unit also may be integrated into the same component. The logic control unit is connected to control the feeder 102, the marking engine 104, the finisher 106, and the printer user interface 108. The GUI 110 comprises a display screen (not shown) and an interfacing means such as a touch screen (not shown), a keyboard (not shown), a mouse (not shown), a track ball (not shown), or a combination thereof. The GUI 110 also may include tear-off menus, floating buttons, dialog boxes, alternate keyboard command and mouse shortcuts, and other alternative physical input devices.

The GUI 110 provides visual interaction with the image-forming machine 100 using one or more applications that implement one or more functionalities such as a document or image viewing functionality and an image-forming management functionality. In one aspect, a document or image viewing functionality and an image-forming management functionality are implemented via a plug-in architecture. A plug-in architecture allows enhancements and updates to be incorporated in a simpler and more efficient manner and without requiring recompilation of the program codes that implement the functionalities. Other architectures may be used.

The document or imaging viewing functionality provides a centralized viewing window for viewing electronic images of the original documents in a print job. In one aspect, the Adobe Acrobat®, Version 5.0 software application, manufactured by Adobe Systems, Inc. located in San Jose, California, implements the document or image viewing functionality on the image-forming machine 100. Other document viewing software applications may be used.

The image-forming management functionality integrates applications that implement, control, or manage the image-forming machine 100. The image-forming management functionality visually represents objects (documents, tickets, other entities, operations, and the like) with icons, tree structures, and pull-down menus. A user may interact with the image-forming management functionality using various interaction means such as the touch screen, the mouse, the track ball, and the keyboard. Such interaction with the visual representations results in manipulation of the underlying objects. While the image-forming management functionality may have an object-oriented appearance, the implementation of the functionality may be by an object oriented programming language or a non-object oriented programming language. In one aspect, the image-forming management functionality is implemented by the ImageSmart® Document Mastering SmartBoard™ used with Digimaster® digital printers manufactured by Heidelberg Digital L.L.C. located in Rochester, New York. Other image-forming management software applications may be used.

The GUI 110 provides a companion application window that displays windows from the various applications implementing functionalities on the image-forming machine. As previously discussed, Adobe Acrobat® implements the document or image viewing functionality and ImageSmart® Document Mastering SmartBoard™ implements the image-forming management functionality. The companion application window displays the Adobe Acrobat® window and the ImageSmart® window on the GUI 110 essentially as one or an integrated window. The Adobe Acrobat window and the ImageSmart® window are viewable at essentially the same time.

The companion application window lets the individual windows essentially act like one window. If the window for one application is resized, the window for the other application also is resized. In one aspect, the windows may shrink or grow in size equally or in the same proportion. In another aspect, one window shrinks while the other window grows in size. In a further aspect, if the window for one application is iconized, the other window will also be iconized.

When a window is moved or resized, the window application receives messages about the new location or the new size. In one aspect, the other window application may "intercept" and use the messages to resize or to redraw the other window in a different location. In addition to these size/move messages, the companion application also registers for any other messages that can modify the size, location and the visibility of the application window. These other messages may come from another application or the operation of different components. The visibility of one application is changed for example when the application is minimized. In this case, the companion application may be minimized as well. Both applications also may be maximized to occupy the whole screen.

A "companion application" may be a separate standalone application or a plug-in application. In one aspect, the companion application window is implemented using the Adobe Acrobat® Software Development Kit manufactured by Adobe Systems, Inc. located in San Jose, California. Other software development tools may be used. While the companion application window is shown using windows from Adobe Acrobat® and ImageSmart® Document Mastering SmartBoard™, windows from other applications may be used and other multiple windows may be displayed.

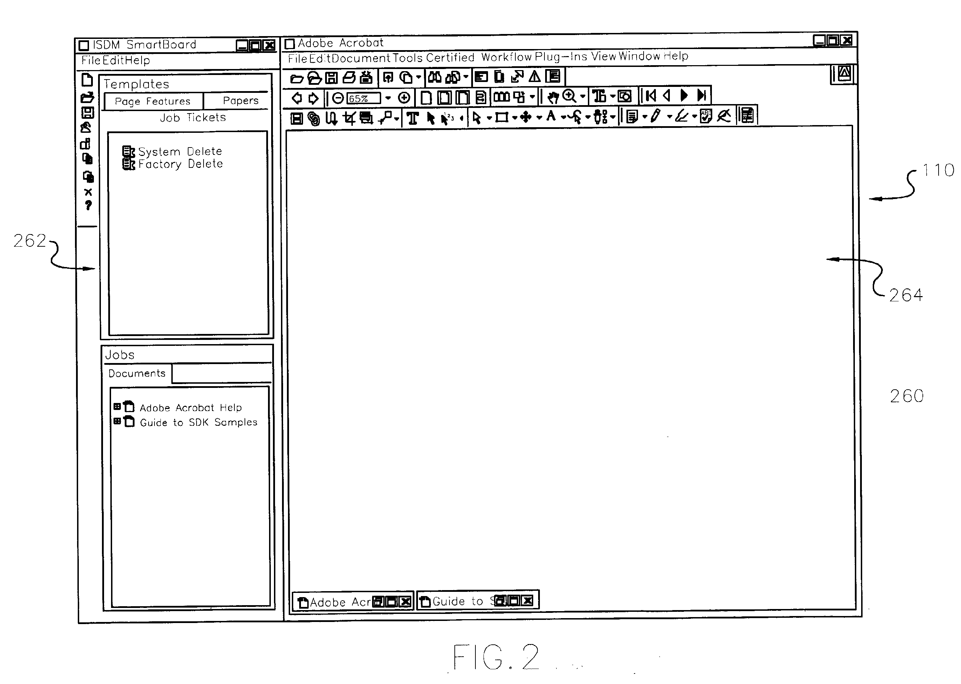

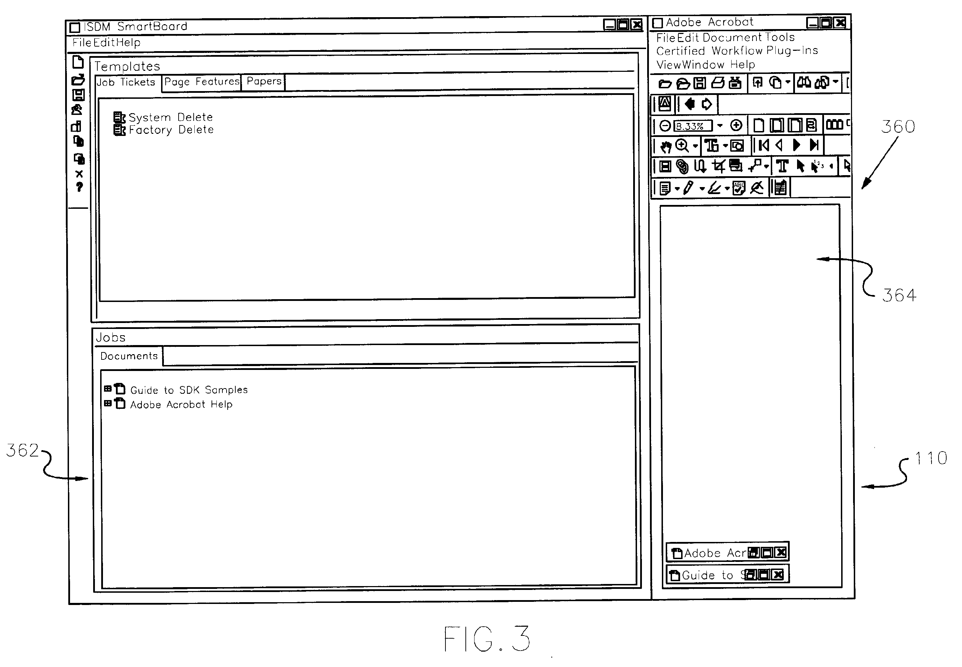

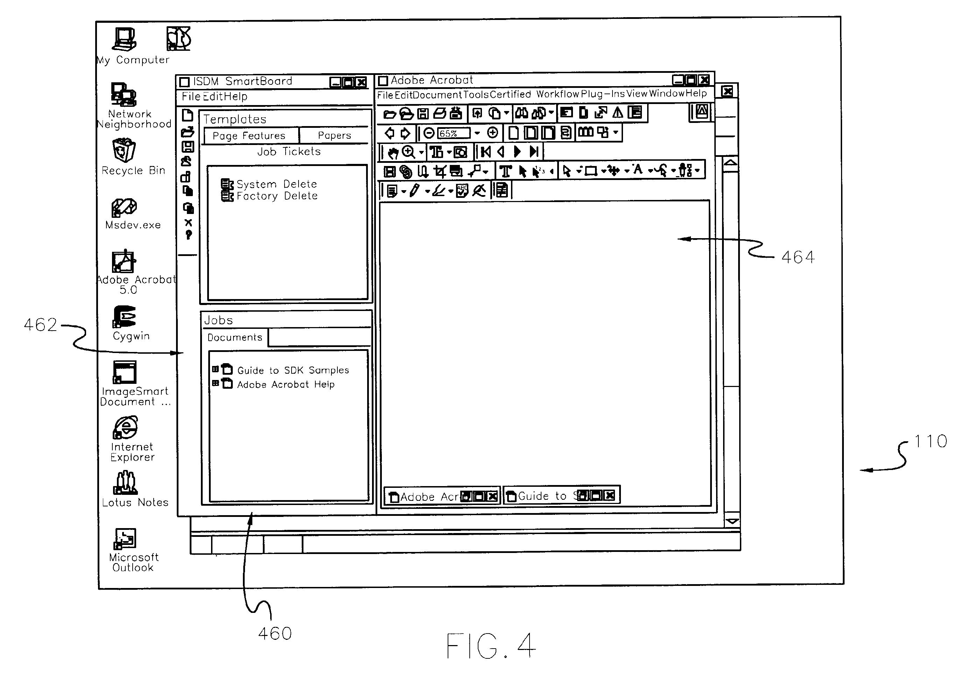

Figures 2-4 represent different views of a companion application window on the GUI 110 according to one embodiment. Figure 2 represents a first view of a companion application window 260 occupying essentially the entire screen of the GUI 110. In the first view, the SmartBoard™ (Desktop) window 262 covers about one-quarter of the screen and the Adobe Acrobat® window 264 covers about three-quarters of the screen. Figure 3 represents a second view of a companion application window 360 occupying essentially the entire screen of the GUI 110. In the second view, the SmartBoard™ (Desktop) window 362 covers about three-quarters of the screen and the Adobe Acrobat® window 364 covers about one-quarter of the screen. Figure 4 represents another view of a companion application window 460 partially occupying the screen of the GUI 110. In is view, the SmartBoard™ (Desktop) window 462 is smaller than the Adobe Acrobat® window 464.

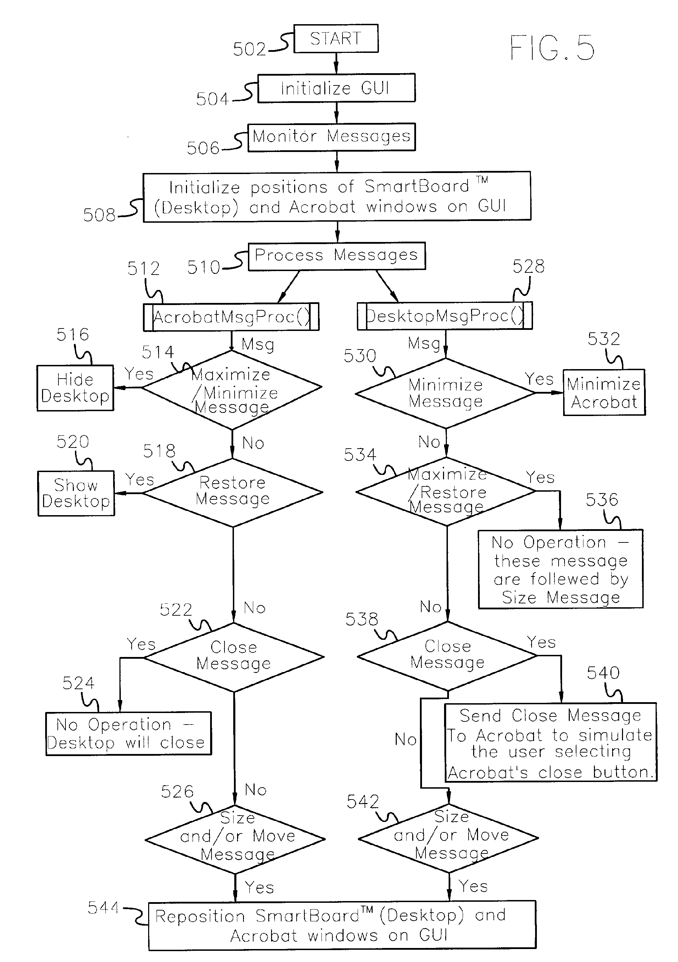

Figure 5 is a flowchart of a method for providing a companion application window on a graphic user interface in an image-forming machine. At the start 502, the SmartBoard™ (Desktop) and Adobe applications are loaded and started. The graphic user interface (GUI) is started and is initialized 504. The SmartBoard™ (Desktop) and Adobe applications monitor 506 messages directed or related to the position and/or operation of the windows on the GUI. The SmartBoard™ (Desktop) and Adobe applications initialize 508 the positions of windows on the GUI. In one aspect, the SmartBoard™ (Desktop) window is positioned at one corner (at a 0,0 coordinate location on the screen) and sized to about one-quarter of the screen or GUI. The Adobe window is moved and sized to fill the remaining portion of the screen or GUI. Messages are processed 510 and directed to the Adobe message processor (AcrobatMsgProc) 512 and the ImageSmart® message processor (DestopMsgProc) 528.

The Adobe message processor 512 processes each message received. If a maximize/minimize message is received 514, the SmartBoard™ (Desktop) window is hidden 516. If a restore message is received 518, the SmartBoard™ (Desktop) window is shown 520. If a close message is received 522, there is no operation because the SmartBoard™ (Desktop) window will close 524. If there is a size and/or move message 526, the Adobe window is moved/sized 544 to the new configuration and the SmartBoard™ (Desktop) window is moved/sized 544 in response to the Adobe Acrobat® window.

The ImageSmart® message processor 528 also processes each message received. If a minimize message is received 530, the Adobe Acrobat® window is minimized 532. If a maximize/restore message is received 534, there is no operation 536 because these messages are followed by a size message. If a close message is received 538, a close message is sent 540 to the Acrobat message processor 512. If there is a size and/or move message 542, the SmartBoard™ (Desktop) window is moved/sized 544 to the new configuration and the Adobe window is moved/sized 544 in response to the SmartBoard™ (Desktop) window.

### List of Parts

- 100: image-forming machine
- 102: feeder
- 104: marking engine
- 106: finisher
- 108: printer use interface
- 110: Graphical User Interface (GUI)
- 260: companion application window
- 262: SmartBoard™ (Desktop) window
- 264: Adobe Acrobat® window
- 360: companion application window
- 362: SmartBoard™ (Desktop) window
- 364: Adobe Acrobat® window
- 460: companion application window
- 462: SmartBoard™ (Desktop) window
- 464: Adobe Acrobat® window
- 502- 544: Method step

## Claims

1. An image-forming system (100) comprising:
a first software application (262);
a second software application (264); and
a graphic user interface (110) operatively connected to receive a first window from the first software application (262) and a second window from the second software application (264), where the graphic user interface (110) displays a companion application window (360) comprising the first and second windows.

2. The image-forming system according to Claim 1,
where first software application (262) comprises a first message processor,
where the second software application (264) comprises a second message processor,
where the first and second message processors process a message, and
where the companion application window is modified in response to the message.

3. The image-forming system according to one of the Claims 1 to 2,
where the first software application (262) moves the first window to a new location in response to the message, and
where the second software application (264) moves the second window in response to the first window.

4. The image-forming system according one of the Claims 1 to 3,
where the first software application (262) resizes the first window in response to the message, and
where the second software application (264) resizes the second window in response to the first window.

5. The image-forming system according to one of the Claims 1 to 4,
where the first software application (262) implements an image viewing functionality, and where the second software application (264) implements an image-forming management functionality.

6. The image-forming system according to one of the Claims 1 to 5,
where the first software application (262) comprises an Adobe Acrobat® software application, and
where the second software application (264) comprises an ImageSmart® Document Mastering SmartBoardTM software application.

7. A method for displaying a companion application window (260) on a graphic user interface (110) in an image-forming machine, comprising
starting a first software application (262)
starting a second software application (264)
displaying an integrated window on the graphic user interface (110), the integrated window comprising a first window from the first software application (262) and a second window from the second software application (264), where the first and second windows are viewable at essentially the same time.

8. The method for displaying a companion application window according to Claim 7, further comprising:
positioning the first window at a location on the graphic user interface; and
positioning the second window on the graphic user interface responsive to the first window.

9. The method for displaying a companion application window according to one of the Claims 7 to 8, further comprising:
sizing the first window to a portion of the graphical user interface; and
sizing the second window to a remaining portion of the graphical user interface.

10. The method for displaying a companion application window according to one of the Claims 7 to 9, further comprising:
monitoring message related to at least one of the position and operation of the first and second windows; and
displaying the integrated window in response to the message.

11. The method for displaying a companion application window according to Claim 10, further comprising:
repositioning the first window at a second location in response to the message; and
repositioning the second window in response to the first window.

12. The method for displaying a companion application window according to Claim 10, further comprising:
resizing the first window in response to the message
resizing the second window in response to the first window.

13. The method for displaying a companion application window according to Claim 10, further comprising:
processing the message through a first message processor in the first software application (262) and through a second message processor in the second message processor; and
modifying at least one of the first and second windows in response to the message.

14. The method for displaying a companion application window according to Claim 13, where the message comprises one of a minimize message, a restore message, a maximize/minimize message, a maximize/restore message, a close message, a size message, and a move message.

15. The method for displaying a companion application window according to Claim 24, further comprising at least one of
minimizing the first window when the message comprises the minimize message;
hiding the second window when the message comprises the maximize/minimize message;
showing the second window when the message comprises the restore message;
closing the second window when the message comprises the close message;
resizing the first window and the second window when the message comprises the size message;
moving the first and second windows when the message comprises the move message

16. The method for displaying a companion application window according to Claim 15, when the message comprises the close message further comprising:
sending the close message from the second message processor to the first message processor.

17. The method for displaying a companion application window according to Claim 15, when the message comprises the resize message further comprising:
resizing the first window in response to the second window.

18. The method for displaying a companion application window according to Claim 15, when the message comprises the move message further comprising:
moving the first window in response to the second window.

19. The method for displaying a companion application window according to one of the claims 7 to 18,
where the first software application (262) implements an image viewing functionality, and
where the second software application (264) implements an image-forming management functionality.

20. The method for displaying a companion application window according to one of the claims 7 to 19,
where the first software application (262) comprises an Adobe Acrobat® software application, and
where the second software application (264) comprises an ImageSmart® Document Mastering SmartBoardTM software application.
